# EUROPEAN PATENT APPLICATION

(11) **EP 4 826 819 A1**
(43) Date of publication of application: **21.10.2026**
(21) Application number: 26171339.0
(22) Date of filing: 09.04.2026
(51) Int. Cl.: H01M 10/0525, H01M 4/66, H01M 10/0585, H01M 50/593

(54) **LITHIUM-ION BATTERY**

(30) Priority: 18.04.2025 JP 2025068496
(71) Applicant: Toyota Jidosha Kabushiki Kaisha, Toyota-shi, Aichi-ken 471-8571 (JP)
(72) Inventor: SAKAMOTO, Ryuto, Toyota-shi, Aichi-ken,, 471-8571 (JP); MATSUYAMA, Takuya, Toyota-shi, Aichi-ken,, 471-8571 (JP)
(74) Representative: Winter, Brandl - Partnerschaft mbB

(57) **Abstract**

A lithium-ion battery configured to suppress alloying of the anode layer and the anode collector, the lithium-ion battery includes a cathode collector, a cathode layer, an electrolyte layer, an anode layer, an anode protective layer and an anode collector, which are stacked in this order; in a first direction perpendicular to a stacking direction, a first-directional end portion of the anode protective layer protrudes in the first direction more than a first-directional end portion of the anode collector; and the anode protective layer includes at least one selected from the group consisting of Ni, Cu, a carbonaceous material and an electroconductive resin.

## Description

### TECHNICAL FIELD

The disclosure relates to a lithium-ion battery.

### BACKGROUND

Various studies have been proposed for batteries as disclosed in Patent Document 1.

Patent Document 1: Japanese Patent Application Laid-Open (JP-A) No. 2023-137711

In the secondary battery of Patent Document 1, the anode collector has a concave structure compared to other electrode layers. Accordingly, short circuits caused by burrs are suppressed. However, once burrs are formed, they pierce the anode layer, thereby alloying the anode layer and the anode collector.

### SUMMARY

The present disclosure was achieved in light of the above circumstances. An object of the present disclosure is to provide a lithium-ion battery configured to suppress alloying of the anode layer and the anode collector.

The present disclosure includes the following embodiments.
<1> A lithium-ion battery,
   wherein a cathode collector, a cathode layer, an electrolyte layer, an anode layer, an anode protective layer and an anode collector are stacked in this order;
   wherein, in a first direction perpendicular to a stacking direction, a first-directional end portion of the anode protective layer protrudes in the first direction more than a first-directional end portion of the anode collector; and
   wherein the anode protective layer comprises at least one selected from the group consisting of Ni, Cu, a carbonaceous material and an electroconductive resin.
<2> The lithium-ion battery according to <1>, wherein, when viewing the lithium-ion battery toward the first direction, in the direction perpendicular to the stacking direction, both ends of the anode protective layer protrude more outward than the anode collector.
<3> The lithium-ion battery according to <1> or <2>, wherein, when considering a direction opposite to the first direction as a second direction, in the second direction, a position of an end portion of the anode protective layer, a position of an end portion of the cathode collector, a position of an end portion of the cathode layer, a position of an end portion of the electrolyte layer, and a position of an end portion of the anode layer are coincident.
<4> The lithium-ion battery according to any one of <1> to <3>, wherein a first-directional end portion of the anode layer protrudes in the first direction more than a first-directional end portion of the anode protective layer.
<5> The lithium-ion battery according to any one of <1> to <4>,
   wherein the lithium-ion battery further comprises an anode collector protective layer between the anode collector and the anode protective layer, and
   wherein, when considering the direction opposite to the first direction as the second direction, a second-directional end portion of the anode collector protrudes in the second direction more than a second-directional end portion of the anode protective layer; the lithium-ion battery comprises, on a second direction side, an anode foil stacking portion configured to bundle and stack the second-directional end portion of the anode collector; and
   wherein a second-directional end portion of the anode collector protective layer protrudes in the second direction more than the second-directional end portion of the anode protective layer.
<6> The lithium-ion battery according to <5>, wherein a thickness of the anode protective layer is larger than a thickness of the anode collector protective layer.
<7> The lithium-ion battery according to any one of <1> to <6>, wherein, when viewing the lithium-ion battery toward the first direction, in the direction perpendicular to the stacking direction, positions of both ends of the cathode collector, positions of both ends of the cathode layer, positions of both ends of the electrolyte layer, positions of both ends of the anode layer, and positions of both ends of the anode protective layer are coincident.
<8> The lithium-ion battery according to any one of <1> to <7>, wherein the anode collector includes an Al foil, and a reaction potential (vs Li/Li⁺) of the anode layer is lower than a reaction potential (vs Li/Li⁺) of Al.
<9> The lithium-ion battery according to any one of <1> to <8>,
   wherein the lithium-ion battery comprises an electrode cell comprising a first anode collector as the anode collector, a first anode protective layer as the anode protective layer, a first anode layer as the anode layer, a first electrolyte layer as the electrolyte layer, a first cathode layer as the cathode layer, the cathode collector, a second cathode layer as the cathode layer, a second electrolyte layer as the electrolyte layer, a second anode layer as the anode layer, a second anode protective layer as the anode protective layer, and a second anode collector as the anode collector, which are stacked in this order, and
   wherein, when viewing the lithium-ion battery toward the first direction, on both side surfaces in the direction perpendicular to the stacking direction, the electrode cell comprises a thermally conductive resin covering the first anode protective layer through the second anode protective layer.
<10> The lithium-ion battery according to <9>,
   wherein the lithium-ion battery comprises an electrode cell group comprising a stack of a plurality of the electrode cells, and
   wherein, when viewing the lithium-ion battery toward the first direction, in the direction perpendicular to the stacking direction, the lithium-ion battery comprises a void on both side surfaces of the first anode collectors of the electrode cell group and a void on both side surfaces of the second anode collectors thereof.
<11> The lithium-ion battery according to any one of <1> to <10>,
   wherein the anode protective layer comprises the electroconductive resin, and
   wherein the electroconductive resin comprises a thermoplastic resin and the carbonaceous material.
<12> The lithium-ion battery according to any one of <1> to <11>, wherein the electrolyte layer comprises a solid electrolyte.
<13> A method for producing the lithium-ion battery defined by any one of <1> to <12>,
   wherein a stack of the cathode collector, the cathode layer, the electrolyte layer, the anode layer and the anode protective layer, which are stacked in this order, is prepared;
   wherein the stack is cut into a predetermined size;
   wherein the anode collector is attached onto the anode protective layer of the stack after cutting the stack; and
   wherein, in a plan view, a width-directional size of the anode collector is smaller than the stack.
<14> The method for producing the lithium-ion battery according to <13>,
   wherein, after cutting the stack, a thermally conductive resin is molded on at least one side surface of the stack, and
   wherein, after attaching the anode collector, the stack is cut along the stacking direction at a predetermined position of the molded thermally conductive resin.

According to the present disclosure, the lithium-ion battery configured to suppress alloying of the anode layer and the anode collector is suppressed.

### BRIEF DESCRIPTION OF THE DRAWINGS

In the accompanying drawings,
FIG. 1 is a schematic plan view of an example the lithium-ion battery of the present disclosure;
FIG. 2 is a schematic sectional view of the lithium-ion battery 100 of the present disclosure along the line A-A';
FIG. 3 is a schematic sectional view of the lithium-ion battery 100 of the present disclosure along the line B-B';
FIG. 4 is a schematic plan view of another example of the lithium-ion battery of the present disclosure;
FIG. 5 is a schematic sectional view of the lithium-ion battery 200 of the present disclosure along the line A-A';
FIG. 6 is a schematic view of another example of the lithium-ion battery of the present disclosure, when viewing the lithium-ion battery toward the first direction;
FIG. 7 is a flowchart of an example of the lithium-ion battery production method of the present disclosure;
FIG. 8 is a schematic plan view of the electrode cell of Example 1; and
FIG. 9 is a schematic plan view of the electrode cell of Comparative Example 1.

### DETAILED DESCRIPTION

Hereinafter, the embodiments of the present disclosure will be described in detail. Matters that are required to implement the present disclosure (such as common structures and production processes of lithium-ion batteries not characterizing the present disclosure) other than those specifically referred to in the Specification, may be understood as design matters for a person skilled in the art based on conventional techniques in the art. The present disclosure can be implemented based on the contents disclosed in the Specification and common technical knowledge in the art.

In addition, dimensional relations (such as length, width and thickness) in the drawing do not reflect actual dimensional relations.

In the present disclosure, unless otherwise noted, a singular noun may encompass a plural noun. For example, the word "particle" may encompass "particles" (a group of particles).

In the present disclosure, an example of the method for calculating the average particle diameter of particles is as follows. First, for a particle shown in an image taken at an appropriate magnification (e.g., 50,000x to 1,000,000x) with a transmission electron microscope (hereinafter referred to as TEM) or a scanning electron microscope (hereinafter referred to as SEM), the diameter when the particle is considered spherical, is calculated. Such a particle diameter calculation by TEM or SEM observation is carried out on 2 to 300 particles of the same type, and the average of the diameters of the particles is determined as the average particle diameter.

### 1. Lithium-ion battery

According to the present disclosure, a lithium-ion battery is provided,
wherein a cathode collector, a cathode layer, an electrolyte layer, an anode layer, an anode protective layer and an anode collector are stacked in this order;
wherein, in a first direction perpendicular to a stacking direction, a first-directional end portion of the anode protective layer protrudes in the first direction more than a first-directional end portion of the anode collector; and
wherein the anode protective layer comprises at least one selected from the group consisting of Ni, Cu, a carbonaceous material and an electroconductive resin.

In a battery which an alloy is formed by a combination of an anode layer and an anode collector foil, if the size of the anode protective layer is the same as the anode collector foil, the burrs of the anode collector touch the anode layer beyond the anode protective layer, resulting in a failure to protect the anode layer. If the size of the anode collector foil is large, short circuits may occur in the battery.

In the present disclosure, the anode protective layer is disposed on the anode layer. Then, the anode collector is attached onto the anode protective layer so that the anode collector fits within the surface of the anode protective layer. As a result, burrs formed by cutting the anode collector touch the anode protective layer, thereby preventing contact of the burrs with the anode layer. Accordingly, alloying of the Li contained in the anode layer can be suppressed, which is caused by contact of the burrs with the anode layer.

In the lithium-ion battery of the present disclosure, the cathode collector, the cathode layer, the electrolyte layer, the anode layer, the anode protective layer and the anode collector are stacked in this order. The lithium-ion battery of the present disclosure generally includes the cathode, the electrolyte layer and the anode.

### [Plan view shape of the lithium-ion battery]

In a plan view, the shape of the lithium-ion battery may be a quadrangular shape or a rectangular shape.

In the plan view of the lithium-ion battery, three of the four sides of the quadrangular anode collector may be situated inside three of the four sides of the quadrangular anode protective layer.

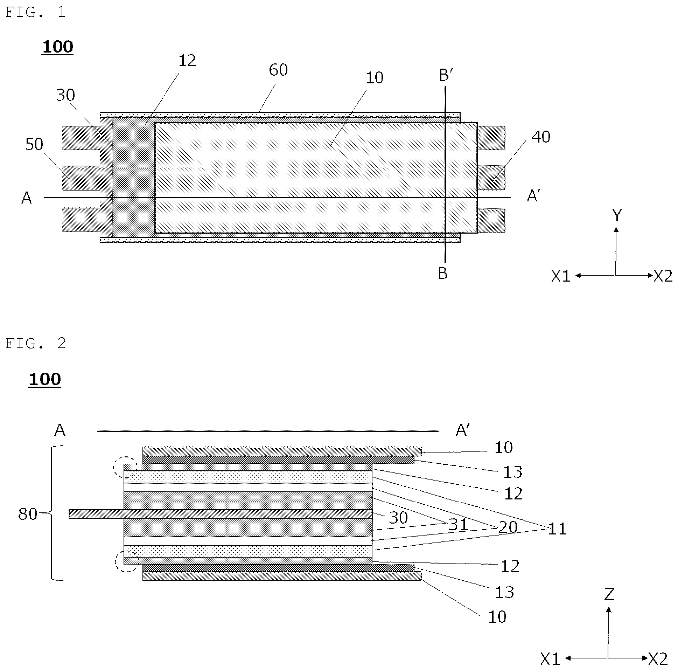

FIG. 1 is a schematic plan view of an example the lithium-ion battery of the present disclosure.

The Y direction shown in FIG. 1 is the width or lateral direction of the lithium-ion battery. The X directions shown in FIG. 1 are both the length or longitudinal directions of the lithium-ion battery. More specifically, one of the X directions is a X1 direction, and the other X direction is a X2 direction.

As shown in FIG. 1, in the plan view of the lithium-ion battery 100 of the present disclosure, the anode collector 10, the anode protective layer 12, the cathode collector 30, the anode foil stacking portion 40, the cathode foil stacking portion 50 and the thermally conductive resin 60 are visible.

In the plan view of the lithium-ion battery 100, the thermally conductive resin 60 is disposed at both ends in the Y direction (the lateral or width direction).

In the plan view of the lithium-ion battery 100, the X1-directional (first-directional) end portion of the anode protective layer 12 protrudes in the X1 direction more than the X1-directional end of the anode collector 10.

In the plan view of the lithium-ion battery 100, the X2-directional (second-directional) end portion of the anode collector 10 protrudes in the X2 direction more than the X2-directional end of the anode protective layer 12.

In the plan view of the lithium-ion battery 100, three of the four sides of the rectangular anode collector 10 are situated inside three of the four sides of the rectangular anode protective layer 12.

In the plan view of the lithium-ion battery 100, the X1-directional end portion of the cathode collector 30 protrudes in the X1 direction more than the X1-directional end portion of the anode protective layer 12.

### [The first direction perpendicular to the stacking direction of the lithium-ion battery]

In the present disclosure, one of the directions perpendicular to the stacking direction of the lithium-ion battery is defined as the first direction. In FIG. 1, the first direction is the X1 direction, and it is the cathode foil stacking portion-side direction.

In the lithium-ion battery of the present disclosure, the first-directional end portion of the anode protective layer protrudes in the first direction more than the first-directional end portion of the anode collector.

The position of the first-directional end portion of the anode protective layer, the position of the first-directional end portion of the cathode layer, the position of the first-directional end portion of the electrolyte layer, and the position of the first-directional end portion of the anode layer may be coincident.

Meanwhile, the first-directional end portion of the anode layer may protrude in the first direction more than the first-directional end portion of the anode protective layer. Also, the first-directional end portion of the cathode layer, the first-directional end portion of the electrolyte layer, and the first-directional end portion of the anode layer may protrude in the first direction more than the first-directional end portion of the anode protective layer.

The first-directional end portion of the cathode collector, the first-directional end portion of the cathode layer, and the first-directional end portion of the electrolyte layer may protrude in the first direction more than the first-directional end portion of the anode layer.

### [The second direction perpendicular to the stacking direction of the lithium-ion battery]

In the present disclosure, the direction opposite to the first direction is considered as the second direction. In FIG. 1, the second direction is the X2 direction, and it is the anode foil stacking portion-side direction.

In the second direction, the position of the end portion of the anode protective layer, the position of the end portion of the cathode collector, the position of the end portion of the cathode layer, the position of the end portion of the electrolyte layer, and the position of the end portion of the anode layer may be coincident.

In the second direction, those other than the position of the end portion of the anode collector, that is, the position of the end portion of the cathode collector, the position of the end portion of the cathode layer, the position of the end portion of the electrolyte layer, and the position of the end portion of the anode layer coincide with the position of the end portion of the anode protective layer. That is, due to the absence of portions protruding more than the anode protective layer, contact of the burrs of the anode collector with other components is prevented.

FIG. 2 is a schematic sectional view of the lithium-ion battery 100 of the present disclosure along the line A-A'.

The Z direction shown in FIG. 2 is the stacking or thickness direction of the lithium-ion battery.

As shown in FIG. 2, the lithium-ion battery 100 includes an electrode cell 80 including an anode collector 10, an anode collector protective layer 13, an anode protective layer 12, an anode layer 11, an electrolyte layer 20, a cathode layer 31, a cathode collector 30, a cathode layer 31, an electrolyte layer 20, an anode layer 11, an anode protective layer 12, an anode collector protective layer 13 and an anode collector 10, which are stacked in this order.

In FIG. 2, the schematic sectional view of the lithium-ion battery 100 along the line A-A' corresponds to a schematic left side view of the electrode cell 80 when viewing the electrode cell from the side.

As shown in FIG. 2, when one of the two (X) directions perpendicular to the Z direction (the stacking direction) is defined as the X1 direction (the first direction) and the direction opposite to the X1 direction is defined as the X2 direction (the second direction), the X1-directional end portion of the anode protective layers 12 protrudes in the X1 direction more than the X1-directional end portion of the anode collectors 10.

As shown in the regions enclosed by dashed lines shown in FIG. 2, in the lithium-ion battery 100, the position of the X1-directional end portion of the anode protective layers 12 coincide with the position of the X1-directional end portion of the anode layers 11.

As shown in FIG. 2, the X1-directional end portion of the cathode collector 30 protrudes in the X1 direction more than the X1-directional end portion of the anode protective layers 12.

As shown in FIG. 2, in the lithium-ion battery 100, in the X2 direction, the position of the end portion of the anode protective layers 12, the position of the end portion of the cathode collector 30, the position of the end portion of the cathode layers 31, the position of the end portion of the electrolyte layers 20, and the position of the end portion of the anode layers 11 are coincident.

As used herein, "the position of the end portion of ... and the position of the end portion of ... are coincident" means such a state, that the end portions are collectively cut, and the state may include misalignment of the end portions which is caused by collectively cutting the end portions. For example, it may include a misalignment of less than 0.5 mm.

### [Shape of the lithium-ion battery when viewing the lithium-ion battery toward the first direction]

When viewing the lithium-ion battery toward the first direction, in the direction perpendicular to the stacking direction, both ends of the anode protective layer may protrude more outward than the anode collector.

In the present disclosure, "when viewing the lithium-ion battery toward the first direction" means "when viewing the lithium-ion battery from the front". In the present disclosure, the front surface of the lithium-ion battery is defined as the surface on the side where the anode foil stacking portion is disposed.

Also in the present disclosure, "when viewing the lithium-ion battery toward the second direction" means "when viewing the lithium-ion battery from the back". In the present disclosure, the back of lithium-ion battery is defined as the surface on the side where the cathode foil stacking portion is disposed.

Also in the present disclosure, the side surfaces of the lithium-ion battery are defined as the surface on the side where the cathode foil stacking portion is disposed at one end portion (in the first direction) and the surface on the side where the anode foil stacking portion is disposed at the other end portion (in the second direction).

When viewing the lithium-ion battery toward the first direction, in the direction perpendicular to the stacking direction, the positions of both ends of the cathode collector, the positions of both ends of the cathode layer, the positions of both ends of the electrolyte layer, the positions of both ends of the anode layer, and the positions of both ends of the anode protective layer may be coincident. Accordingly, the width of the cathode collector, the width of the cathode layer, the width of the electrolyte layer, the width of the anode layer and the width of the anode protective layer may be the same.

During the production of the lithium-ion battery, the cathode collector, the cathode layer, the electrolyte layer, the anode layer and the anode protective layer can be collectively cut at once. Since their end portions are aligned, contact of the anode collector with other components is suppressed.

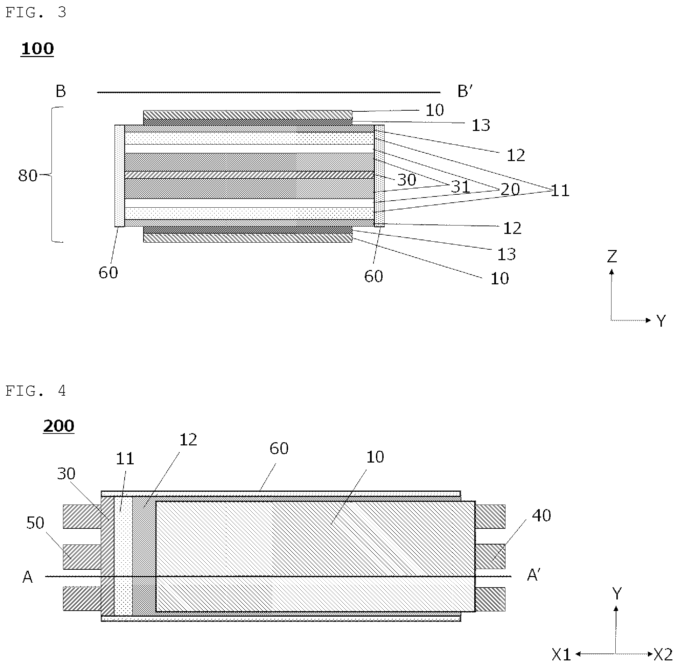

FIG. 3 is a schematic sectional view of the lithium-ion battery 100 of the present disclosure along the line B-B'.

In FIG. 3, the schematic sectional view of the lithium-ion battery 100 along the line B-B' corresponds to the schematic front view of the lithium-ion battery 100 when viewing the battery from the front.

As shown in FIG. 3, the electrode cell 80 of the lithium-ion battery 100 includes the thermally conductive resin 60 covering one anode protective layer 12 through the other anode protective layer 12 on both side surfaces in the perpendicular direction (the Y direction) to the Z direction (the stacking direction).

As shown in FIG. 3, in the lithium-ion battery 100, in the Y direction, both ends of the anode protective layers 12 protrude more outward than those of the anode collectors 10 and those the anode collector protective layers 13.

As shown in FIG. 3, in the lithium-ion battery 100, in the Y direction, the positions of both ends of the cathode collector 30, the positions of both ends of the cathode layer 31, the positions of both ends of the electrolyte layer 20, the positions of both ends of the anode layer 11, and the positions of both ends of the anode protective layer 12 are coincident.

FIG. 4 is a schematic plan view of another example of the lithium-ion battery of the present disclosure.

In FIG. 4, the same components as FIG. 1 are allotted with the same numbers, and they will not be described here.

As shown in FIG. 4, in the plan view of the lithium-ion battery 200 of the present disclosure, the anode collector 10, the anode protective layer 12, the anode layer 11, the cathode collector 30, the anode foil stacking portion 40, the cathode foil stacking portion 5 and the thermally conductive resin 60 are visible.

In the plan view of the lithium-ion battery 200, the X1-directional (first-directional) end portion of the anode protective layer 12 protrudes in the X1 direction more than the X1-directional end of the anode collector 10, and the X1-directional end portion of the anode layer 11 protrudes in the X1 direction more than the X1-directional end portion of the anode protective layer 12.

That is, FIG. 4 is different from FIG. 1 in that part of the anode layer 11 is not covered with the anode protective layer 12 and is visible.

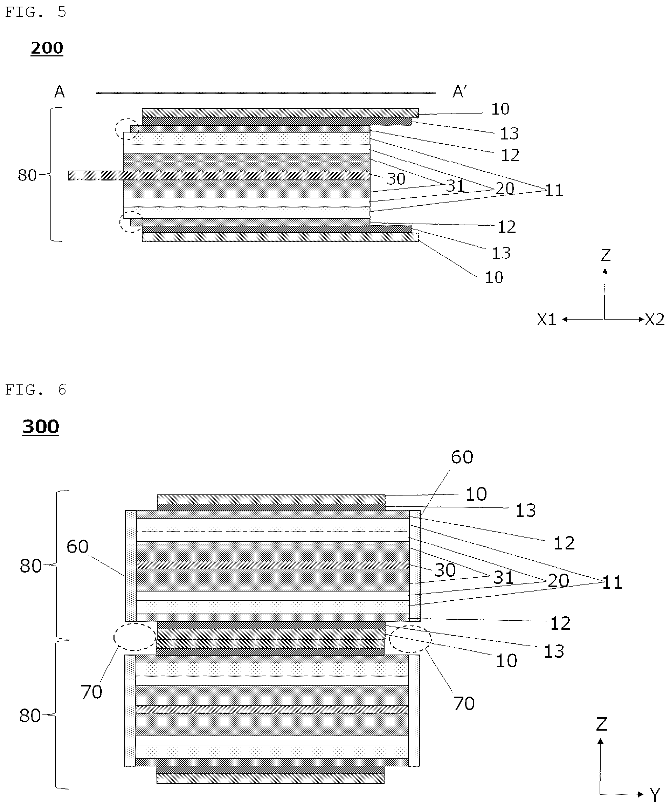

FIG. 5 is a schematic sectional view of the lithium-ion battery 200 of the present disclosure along the line A-A'.

In FIG. 5, the same components as FIG. 2 are allotted with the same numbers, and they will not be described here.

As shown in the regions enclosed by dashed lines shown in FIG. 5, in the lithium-ion battery 200, the X1-directional end portion of the anode protective layers 12 protrudes in the X1 direction more than the X1-directional end portion of the anode collectors 10, and the X1-directional end portion of the anode layers 11 protrudes in the X1 direction more than the X1-directional end portion of the anode protective layers 12.

### [Anode]

The anode includes the anode layer, the anode protective layer and the anode collector. As needed, the anode further includes the anode collector protective layer, the anode foil stacking portion and so on.

### [Anode layer]

The anode layer contains at least an anode active material. As needed, the anode layer may contain at least one selected from the group consisting of an electrolyte, an electroconductive material and a binder.

The anode active material may be in a particulate form or a sheet form, for example. The average particle diameter of the particles of the anode active material may be 0.1 µm or more and 30 µm or less, for example.

The anode active material may contain, for example, at least one selected from the group consisting of a carbon-based active material, a Li-based active material, a Si-based active material and lithium titanate.

The carbon-based active material may contain, for example, at least one selected from the group consisting of graphite, soft carbon and hard carbon. The graphite is a general term for natural graphite and artificial graphite. The graphite may be a mixture of natural graphite and artificial graphite.

As the Li-based active material, examples include, but are not limited to, Li, Li silicate and Li alloy.

As the Si-based active material, examples include, but are not limited to, Si, SiO and Si alloy.

As the electrolyte, electroconductive material and binder used in the anode layer, examples include, but are not limited to, those that will be exemplified below as the electrolyte, electroconductive material and binder used in the cathode layer.

The percentage of the electrolyte in the anode layer may be 0% by mass or more and 60% by mass or less, for example.

The percentage of the electroconductive material in the anode layer may be 0.1% by mass or more and 5% by mass or less, for example.

The percentage of the binder in the anode layer may be 0.5% by mass or more and 15% by mass or less, for example.

The plan view shape of the anode layer is not particularly limited. For example, it may be a quadrangular shape or a rectangular shape.

### [Anode protective layer]

In the plan view of the lithium-ion battery, the anode protective layer may partly or entirely cover the anode layer.

The anode protective layer contains at least one selected from the group consisting of Ni, Cu, a carbonaceous material and an electroconductive resin. Ni and Cu are metals that resist alloying with lithium.

As the carbonaceous material, examples include, but are not limited to, carbon black, acetylene black, carbon nanotube (CNT) and carbon fiber.

The electroconductive resin may be a mixture containing a resin and a filler. The resin and the filler may be mixed at any ratio, and the mixing ratio is not particularly limited. For example, the resin and the may be mixed at a volume ratio of from 20:80 to 80:20.

The resin may be a thermoplastic resin.

As the thermoplastic resin, examples include, but are not limited to, styrene-butadiene rubber (SBR), polypropylene (PP), polyethylene (PE), polyvinyl chloride (PVC), polybutylene terephthalate (PBT), polyethylene terephthalate (PET), polyphenylene sulfide (PPS), polyether ether ketone (PEEK), polyimide resin (PI), liquid crystalline polymer (LCP) and fluorine resin.

As the filler, examples include, but are not limited to, Ni powder, Cu powder, alumina and the carbonaceous material.

The anode protective layer may contain the thermoplastic resin as the resin and the carbonaceous material as the filler. Accordingly, electroconductivity is generally ensured, and when abnormal heat is generated by the burrs, the composition of the anode protective layer is changed by the thermoplastic resin, thereby disconnecting the anode layer.

The thickness of the anode protective layer may be 1 µm or more, or it may be 2 µm or more, from the point of view that defects are less likely to occur. On the other hand, the thickness may be 10 µm or less.

The plan view shape of the anode protective layer is not particularly limited. For example, it may be a quadrangular shape or a rectangular shape.

### [Anode collector]

The anode collector may include an Al foil, or it may be an Al foil. When the anode collector is an Al foil, the reaction potential (vs Li/Li⁺) of the anode layer may be lower than the reaction potential (vs Li/Li⁺) of Al. Since the anode collector is an Al foil, the weight reduction of the lithium-ion battery is achieved. Since the reaction potential of the anode layer is lower than the reaction potential of Al, alloying of the Al is suppressed. To decrease the reaction potential of the anode layer lower than the reaction potential of Al, the anode layer may contain an anode active material containing an element such as Li, Na, K, Mg and Ca.

The thickness of the anode collector may be in a range of from 1 µm to 50 µm, for example. The shape of the anode collector may be a foil shape, a plate shape or the like.

The plan view shape of the anode collector is not particularly limited. For example, it may be a quadrangular shape or a rectangular shape.

### [Anode collector protective layer]

The lithium-ion battery may further include the anode collector protective layer between the anode collector and the anode protective layer.

The anode collector protective layer is only required to be disposed on at least the anode protective layer-side surface of the anode collector. It may be disposed on both surfaces of the anode collector.

The anode collector protective layer may be a Ni-plated layer. That is, the anode collector may be plated with Ni.

In the plan view of the lithium-ion battery, the size of the anode collector protective layer may be the same as the anode collector, and the anode collector protective layer may be disposed at the same position as the anode collector.

The first-directional end portion of the anode protective layer may protrude in the first direction more than the first-directional end portion of the anode collector protective layer. Also in the plan view of the lithium-ion battery, three of the four sides of the quadrangular anode collector protective layer may be situated inside three of the four sides of the quadrangular anode protective layer, and the remaining one side of the quadrangular anode collector protective layer may be situated outside the remaining one side of the quadrangular anode protective layer.

The thickness of the anode protective layer may be larger than the thickness of the anode collector protective layer. Since the anode protective layer has a sufficient thickness, the anode protective layer absorbs a pressure generated by the burrs of the anode collector, thereby protecting the anode layer.

The plan view shape of the anode collector protective layer is not particularly limited. For example, it may be a quadrangular shape or a rectangular shape.

### [Anode foil stacking portion]

The lithium-ion battery may include, on the second direction side, the anode foil stacking portion configured to bundle and stack the second-directional end portion of the anode collector. The anode foil stacking portion suppresses contact of the anode collector with the anode layer.

The second-directional end portion of the anode collector may protrude in the second direction more than the second-directional end portion of the anode protective layer.

The second-directional end portion of the anode collector protective layer may protrude in the second direction more than the second-directional end portion of the anode protective layer. That is, the second-directional end portion of the anode collector protective layer may face the end portion of the anode collector on the second direction side, and it may be disposed on at least the anode protective layer-side surface of the end portion of the anode collector on the second direction side.

### [Cathode]

The cathode includes the cathode layer and the cathode collector. As needed, it further includes a cathode foil stacking portion and so on.

### [Cathode layer]

The cathode layer contains at least a cathode active material. As needed, the cathode layer may contain at least one selected from the group consisting of an electrolyte, an electroconductive material and a binder.

The cathode layer may be disposed on one surface of the cathode collector, or it may be disposed on both surfaces of the cathode collector.

The plan view shape of the cathode layer is not particularly limited. For example, it may be a quadrangular shape or a rectangular shape.

As the cathode active material, examples include, but are not limited to, a layered rock salt-type active material such as LiCoO₂, LiMnO₂, LiNiO₂, LiVO₂, LiNi_{1/3}Co_{1/3}Mn_{1/3}O₂ and LiNi_{0.8}Mn_{0.1}Co_{0.1}O₂, a spinel-type active material such as LiMn₂O₄, Li₄Ti₅O₁₂ and Li(Ni_{0.5}Mn_{1.5})O₄, and an olivine-type active material such as LiFePO₄, LiMnPO₄, LiNiPO₄ and LiCoPO₄.

On the surface of the cathode active material, a coating layer containing a Li ion-conducting compound may be formed. This is because a reaction between the cathode active material and the solid electrolyte (especially the sulfide solid electrolyte) can be suppressed. As the Li ion-conducting compound, examples include, but are not limited to, B₂O₃, Li₂B₄O₇, LiBPO₄, Li₃PO₄, LiPO₃ and LiNbO₃. The thickness of the coating layer is 1 nm or more and 30 nm or less, for example. The coating layer containing the Li ion-conducting compound covers 70% or more of the cathode active material surface, for example. The coating layer may cover 90% or more of the cathode active material surface, or it may cover 100% of the cathode active material surface. The method for covering the cathode active material surface is not particularly limited, and a conventionally-known method may be appropriately employed.

The cathode active material is generally in a particulate form. The cathode active material may be primary particles, or it may be secondary particles (aggregated primary particles).

The average particle diameter of the cathode active material is not particularly limited. For example, the average particle diameter is 0.01 µm or more and 50 µm or less. It may be 0.5 µm or more and 30 µm or less.

The percentage of the cathode active material in the cathode layer is 20% by mass or more, for example. It may be 30% by mass or more, or it may be 40% by mass or more. When the percentage of the cathode active material is too small, there is a possibility that a sufficient energy density is not obtained. On the other hand, the percentage of the cathode active material in the cathode layer is 95% by mass or less, for example. It may be 70% by mass or less, or it may be 60% by mass or less. When the percentage of the cathode active material is too large, the ion conductivity and electron conductivity of the cathode layer may relatively decrease.

As the electrolyte, examples include, but are not limited to, a solid electrolyte. The solid electrolyte may be an inorganic solid electrolyte such as a sulfide solid electrolyte, a halide solid electrolyte, an oxide solid electrolyte and a complex hydride solid electrolyte, or it may be an organic solid electrolyte such as a gel electrolyte.

The sulfide solid electrolyte is an electrolyte which contains a S element. In general, the sulfide solid electrolyte contains at least a Li element and a S element. The sulfide solid electrolyte may further contain a M element (M is at least one selected from the group consisting of P, As, Sb, Si, Ge, Sn, B, Al, Ga and In). Also, the sulfide solid electrolyte may contain a halogen element such as F, Cl, Br and I.

The sulfide solid electrolyte may be a glass-based (amorphous) sulfide solid electrolyte, may be a glass-ceramic-based sulfide solid electrolyte, or may be a crystal-based sulfide solid electrolyte. The sulfide solid electrolyte may have a crystal phase. As the crystal phase, examples include, but are not limited to, a Thio-LISICON-type crystal phase, an argyrodite-type crystal phase and a LGPS-type crystal phase.

The composition of the sulfide solid electrolyte is not particularly limited. As the composition, examples include, but are not limited to, xLi₂S·(1-x)P₂S₅ (where 0.5 ≤ x < 1) and yLiI·zLiBr·(100-y-z)(xLi₂S·(1-x)P₂S₅) (where 0.5 ≤ x < 1, 0 ≤ y ≤ 30 and 0 ≤ z ≤ 30). In these compositions, x may satisfy 0.7 ≤ x ≤ 0.8. Another example of the composition of the sulfide solid electrolyte is Li₇₋ₓPS₆₋ₓXₓ (where X is at least one selected from the group consisting of F, Cl, Br and I, and x satisfies 0 ≤ x < 2). Another example of the composition of the sulfide solid electrolyte is Li₄₋ₓMe₁₋ₓPₓS₄ (where 0 < x < 1 and Me is at least one selected from the group consisting of Al, Zn, In, Ge, Si, Sn, Sb, Ga and Bi). As the sulfide solid electrolyte, examples include, but are not limited to, LiI-LiBr-Li₂S-P₂S₅, LiI-Li₂S-P₂S₅, LiI-Li₂S-P₂O₅ and LiI-Li₃PO₄-P₂S₅.

As the oxide solid electrolyte, examples include, but are not limited to, a substance having a garnet-type crystal structure containing a Li element, La element, an A element (A is at least one selected from the group consisting of Zr, Nb, Ta and Al) and an O element. For example, the oxide solid electrolyte may be Li₂O-B₂O₃-P₂O₅, Li₂O-SiO₂, Li₂O-B₂O₃, Li_{1.3}Al_{0.3}Ti_{0.7}(PO₄)₃, Li₅La₃Ta₂O₁₂, Li₇La₃Zr₂O₁₂, Li₆BaLa₂Ta₂O₁₂, Li_{3.6}Si_{0.6}P_{0.4}O₄, Li₄SiO₄, Li₃PO₄, Li₃₊ₓPO₄₋ₓNₓ (where 1 ≤ x ≤ 3) or the like.

For example, the halide solid electrolyte may be a solid electrolyte containing Li, D and X (D is at least one selected from the group consisting of Ti, Al and Y, and X is F, Cl or Br).

The gel electrolyte may contain an electrolytic solution and a polymer material. The polymer material may be a material forming a polymer matrix. For example, the polymer material may contain at least one selected from the group consisting of polyvinylidene fluoride (PVdF), poly(vinylidene fluoride-co-hexafluoropropylene) (PVDF-HFP), polyacrylonitrile (PAN), PVdF-PAN, polyethylene oxide (PEO), polyethylene glycol (PEG) and derivatives thereof.

The form of the solid electrolyte may be a particulate form, from the viewpoint of good handleability.

The average particle diameter of the solid electrolyte particles is not particularly limited. It may be from 1 nm to 100 µm.

The percentage of the solid electrolyte in the cathode layer may be 1% by mass or more, for example. When the percentage of the solid electrolyte is too small, the cathode layer may have a shortage of ion conducting paths. On the other hand, the percentage of the solid electrolyte in the cathode layer may be 60% by mass or less, for example. When the percentage of the solid electrolyte is too large, the percentage of the cathode active material is relatively small, and a low energy density may be obtained.

The cathode layer may contain an electroconductive material. The electron conductivity of the cathode layer is increased by adding the electroconductive material. As the electroconductive material, examples include, but are not limited to, a carbonaceous electroconductive material, metal particles and an electroconductive polymer. As the carbonaceous electroconductive material, examples include, but are not limited to, a particulate material such as Acetylene Black (AB) and Ketjen Black (KB) and a fibrous material such as vapor-grown carbon fiber (VGCF), carbon nanotube (CNT) and carbon nanofiber (CNF) .

The percentage of the electroconductive material in the cathode layer may be 0.1% by mass or more, for example. When the percentage of the electroconductive material is too small, the cathode layer may have a shortage of electron conducting paths. On the other hand, the percentage of the electroconductive material in the cathode layer may be 5% by mass or less, for example. When the percentage of the electroconductive material is too large, the percentage of the cathode active material is relatively small, and a low energy density may be obtained.

The cathode layer may contain a binder. As the binder, examples include, but are not limited to, styrene-butadiene rubber (SBR), polyimide (PI), polyacrylic acid (PAA), acrylonitrile-butadiene rubber (NBR), butadiene rubber (BR), polyvinylidene fluoride (PVdF), polytetrafluoroethylene (PTFE), a styrene-isoprene-styrene block copolymer (SIS) and an ethylene-propylene-diene copolymer (EPDM).

The percentage of the binder in the cathode layer may be 0.5% by mass or more, for example. When the percentage of the binder is too small, there is a possibility that an increase in resistance which is due to charge and discharge, cannot be sufficiently reduced. On the other hand, the percentage of the binder in the cathode layer may be 15% by mass or less, for example. When the percentage of the binder is too large, the percentage of the cathode active material is relatively small, and a low energy density may be obtained.

The thickness of the cathode layer is 0.1 µm or more and 1000 µm or less, for example. The thickness of the cathode layer may be 1 µm or more and 500 µm or less, or it may be 30 µm or more and 100 µm or less.

The method for producing the cathode layer is not particularly limited. For example, the production method may be a method including the steps of obtaining a cathode slurry by mixing the cathode active material, the electroconductive material and a solvent, applying the cathode slurry to both surfaces of the cathode collector and drying the applied slurry, thereby forming the cathode layer. To form the cathode layer, a press treatment (pressing the cathode layer in the thickness direction) may be performed. As the press treatment, examples include, but are not limited to, roller pressing and plate pressing.

As the solvent, examples include, but are not limited to, N-methylpyrrolidone (NMP), tetralin, diisobutyl ketone, butyl butyrate, mesitylene, heptane, dibutyl ether, decane, dodecane, isodecane and toluene. The solvent may contain two or more selected from these components.

### [Cathode collector]

As the material for the cathode collector, examples include, but are not limited to, SUS, Cr, Au, Pt, Zn, aluminum, copper, nickel, iron, titanium and carbon. The thickness of the cathode collector is 0.1 µm or more and 100 µm or less, for example. The form of the cathode collector may be a foil form, a plate form or the like.

The plan view shape of the cathode collector is not particularly limited. For example, it may be a quadrangular shape or a rectangular shape.

The structure of the cathode collector may be such that at least one of the carbonaceous material and the electroconductive resin is disposed on at least one surface thereof as a cathode collector protection layer.

### [Cathode foil stacking portion]

The lithium-ion battery may include, on the first direction side, the cathode foil stacking portion configured to bundle and stack the first-directional end portion of the cathode collector. The cathode foil stacking portion suppresses contact of the cathode collector with the cathode layer.

The first-directional end portion of the cathode collector may protrude in the first direction more than the first-directional end portion of the anode protective layer.

### [Electrolyte layer]

The electrolyte layer is a layer formed between the cathode layer and the anode layer, and it contains at least an electrolyte. The electrolyte may be an electrolytic solution, or it may be a solid electrolyte.

The electrolyte layer may be a solid electrolyte layer composed of a solid.

When the electrolyte layer is the solid electrolyte layer, the solid electrolyte layer contains a solid electrolyte. As needed, it contains a binder and so on.

As the solid electrolyte, examples include, but are not limited to, those exemplified above as the solid electrolyte of the cathode layer.

The solid electrolyte may be one solid electrolyte, or it may be two or more solid electrolytes. In the case of using two or more solid electrolytes, they may be mixed together, or they may be formed into layers to obtain a multi-layered structure.

The amount of the solid electrolyte contained in the solid electrolyte layer is not particularly limited. For example, it may be 50% by mass or more; it may be in a range of 60% by mass or more and 100% by mass or less; it may be in a range of 70% by mass or more and 100% by mass or less; or it may be 100% by mass. The electrolytic solution contained in the solid electrolyte layer may be less than 1% by mass, relative to the total amount of the solid electrolyte layer.

As the binder, examples include, but are not limited to, a binder that can be incorporated in the above-described cathode layer.

The content of the binder in the solid electrolyte layer may be from 0% by mass to 10% by mass, relative to the total amount of the solid electrolyte layer.

The thickness of the electrolyte layer is 0.1 µm or more and 1000 µm or less, for example. The thickness of the electrolyte layer may be 0.1 µm or more and 500 µm or less, or it may be 0.1 µm or more and 100 µm or less.

The plan view shape of the electrolyte layer is not particularly limited. For example, it may be a quadrangular shape or a rectangular shape.

### [Electrode cell]

The lithium-ion battery may include the electrode cell comprising the first anode collector as the anode collector, the first anode protective layer as the anode protective layer, the first anode layer as the anode layer, the first electrolyte layer as the electrolyte layer, the first cathode layer as the cathode layer, the cathode collector, the second cathode layer as the cathode layer, the second electrolyte layer as the electrolyte layer, the second anode layer as the anode layer, the second anode protective layer as the anode protective layer, and the second anode collector as the anode collector, which are stacked in this order.

The electrode cell may be a monopolar electrode cell.

The plan view shape of the electrode cell is not particularly limited. For example, it may be a quadrangular shape or a rectangular shape.

The first anode collector and the second anode collector may be composed of the same material; they may be composed of different materials; or they may be composed of an Al foil. Both the first anode collector and the second anode collector may be stacked by the anode foil stacking portion. For the sake of simplicity, the first anode collector and the second anode collector may be simply referred to as "anode collector" each.

The first anode protective layer and the second anode protective layer may be composed of the same material, or they may be composed of different materials. For the sake of simplicity, the first anode protective layer and the second anode protective layer may be simply referred to as "anode protective layer" each.

The first anode layer and the second anode layer may be composed of the same material, or they may be composed of different materials. For the sake of simplicity, the first anode layer and the second anode layer may be simply referred to as "anode layer" each.

The first electrolyte layer and the second electrolyte layer may be composed of the same material, or they may be composed of different materials. For the sake of simplicity, the first electrolyte layer and the second electrolyte layer may be simply referred to as "electrolyte layer" each.

The first cathode layer and the second cathode layer may be composed of the same material, or they may be composed of different materials. For the sake of simplicity, the first cathode layer and the second cathode layer may be simply referred to as "cathode layer" each.

The electrode cell may include the first anode collector protective layer between the first anode collector and the first anode protective layer, and it may include the second anode collector protective layer between the second anode collector and the second anode protective layer.

The first anode collector protective layer and the second anode collector protective layer may be composed of the same material; they may be composed of different materials; or they may be composed of a Ni-plated layer. For the sake of simplicity, the first anode collector protective layer and the second anode collector protective layer may be simply referred to as "anode collector protective layer" each.

### [Thermally conductive resin]

When viewing the lithium-ion battery toward the first direction, on both side surfaces in the direction perpendicular to the stacking direction, the electrode cell may include the thermally conductive resin covering the first anode protective layer through the second anode protective layer.

When the plan view shape of the electrode cell is rectangular shape, in the plan view of the lithium-ion battery, the electrode cell may include the thermally conductive resin on both
longitudinal-directional sides of the rectangular first anode protective layer, and the electrode cell does not have to include the thermally conductive resin on both lateral-directional sides of the rectangular first anode protective layer.

The heat of the electrode cell is dissipated by the thermally conductive resin, and the heat dissipation of the electrode cell is increased, accordingly. The size of the first anode collector on the top surface of the electrode cell and that of the second anode collector on the bottom surface of the electrode cell in the direction perpendicular to the stacking direction when viewing the lithium-ion battery toward the first direction, that is, their widths can be decreased, and the production of the lithium-ion battery is facilitated.

The thermally conductive resin may be a thermoplastic resin. The thermoplastic resin used as the thermally conductive resin and the thermoplastic resin used as the anode protective layer may be the same material, or they may be different materials.

The thermally conductive resin may contain the thermoplastic resin and a filler. As the filler, examples include, but are not limited to, those that are applicable to the anode protective layer. Since the filler is contained in the thermally conductive resin, the heat conductivity of the cathode collector is increased.

The thickness of the thermally conductive resin in the direction perpendicular to the stacking direction when viewing the lithium-ion battery toward the first direction, may be 1 mm or more, or it may be 2 mm or more. On the other hand, it may be 10 mm or less.

### [Electrode cell group]

The lithium-ion battery may include the electrode cell group comprising a stack of a plurality of the electrode cells.

The number of the stacked electrode cells of the electrode cell group is only required to be two or more. The upper limit of the number of the stacked electrode cells is not particularly limited, and it may be 100 or less.

The electrode cell group may be a group of monopolar electrode cells.

The plan view shape of the electrode cell group is not particularly limited. For example, it may be a quadrangular shape or a rectangular shape.

### [Voids]

When viewing the lithium-ion battery toward the first direction, in the direction perpendicular to the stacking direction, the lithium-ion battery may include a void on both side surfaces of the first anode collectors of the electrode cell group and a void on both side surfaces of the second anode collectors thereof.

Due to these voids, heat conduction between the adjusted electrode cells is reduced.

FIG. 6 is a schematic view of another example of the lithium-ion battery of the present disclosure, when viewing the lithium-ion battery toward the first direction. In FIG. 6, the schematic view of the lithium-ion battery 300 corresponds to the schematic front view of the lithium-ion battery 300 when viewing the battery from the front.

The lithium-ion battery 300 shown in FIG. 6 has a structure of stacking two electrode cells 80.

As shown in FIG. 6, in the region where the two electrode cells 80 are stacked in the perpendicular direction (the Y direction) relative to the stacking direction (the Z direction), the lithium-ion battery 300 includes voids 70 in the areas enclosed by a dashed line on both side surfaces of the anode collectors 10 and both side surfaces of the anode collector protective layers 13.

### [Battery]

The battery of the present disclosure is a lithium-ion battery. Also in the present disclosure, the battery may be a solid-state battery in which the electrolyte layer contains a solid electrolyte. The solid-state battery may be a semi-solid-state battery or an all-solid-state battery. In the present disclosure, the semi-solid-state battery is a battery in which the electrolyte layer contains a solid component (such as an inorganic solid electrolyte) and a liquid component (such as a solvent and an electrolytic solution). In the present disclosure, the all-solid-state battery is a battery in which the electrolyte layer contains, as the electrolyte, only a solid component such as an inorganic solid electrolyte. In the present disclosure, the battery may be a primary battery or a secondary battery. Among them, the solid-state battery may be a secondary battery. This is because a secondary battery can be repeatedly charged and discharged, and it is useful as an in-vehicle battery, for example.

In the present disclosure, the lithium-ion battery may further include a fixing jig for applying a fixing pressure to the cathode, the electrolyte layer and the anode along the thickness direction. Especially when the electrolyte layer is the solid electrolyte layer, the fixing pressure may be applied for the formation of good ion conducting paths and electron conducting paths. The fixing pressure is 0.1 MPa or more, for example. The fixing pressure may be 1 MPa or more, or it may be 5 MPa or more. On the other hand, the fixing pressure is 100 MPa or less, for example. The fixing pressure may be 50 MPa or less, or it may be 20 MPa or less.

The lithium-ion battery of the present disclosure may include an outer casing.

The outer casing houses the cathode, the electrolyte layer and the anode.

The material for the outer casing is not particularly limited, as long as it is a material stable in electrolyte. As the material, examples include, but are not limited to, a metal body such as SUS and a resin such as polypropylene, polyethylene and acrylic resin.

As the form of the outer casing, examples include, but are not limited to, a coin form, a flat plate form, a cylindrical form and a laminate form.

The plan view shape of the outer casing is not particularly limited. For example, it may be a quadrangular shape, a rectangular shape, a circular shape or an elliptical shape.

As the applications of the battery, examples include, but are not limited to, the power source of vehicles such as a hybrid electric vehicle (HEV), a plug-in hybrid electric vehicle (PHEV), a battery electric vehicle (BEV), a gasoline vehicle and a diesel vehicle. Especially, the battery of the present disclosure may be used as the driving power supply of a hybrid electric vehicle (HEV), a plug-in hybrid electric vehicle (PHEV) or a battery electric vehicle (BEV). Also, the battery of the present disclosure may be used as the powder source of mobile objects other than vehicles, such as railroads, ships and aircraft, or it may be used as the power source of electrical appliances such as information processing devices.

### 2. Lithium-ion battery production method

According to the present disclosure, a method for producing the lithium-ion battery is provided,
wherein a stack of the cathode collector, the cathode layer, the electrolyte layer, the anode layer and the anode protective layer, which are stacked in this order, is prepared;
wherein the stack is cut into a predetermined size;
wherein the anode collector is attached onto the anode protective layer of the stack after cutting the stack; and
wherein, in a plan view, the width-directional size (the lateral- or Y-directional size) of the anode collector is smaller than the stack.

According to the present disclosure, a stack obtained by stacking the cathode collector to the anode protective layer is cut into a predetermined size. Then, the anode collector is attached onto the anode protective layer, thereby suppressing the formation of burrs of the anode collector. Accordingly, alloying of the anode layer and the anode collector is suppressed.

The lithium-ion battery production method of the present disclosure includes (1) the stack preparing step, (2) the stack cutting step and (3) the attaching step. As needed, the production method includes (A) a molding step, (B) a resin cutting step, (C) an electrode cell group producing step and so on.

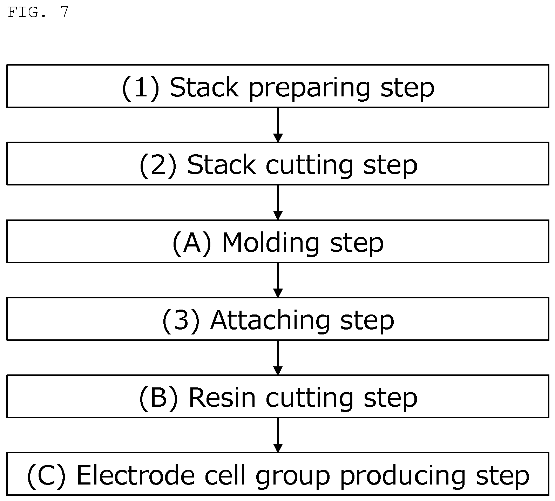

FIG. 7 is a flowchart of an example of the lithium-ion battery production method of the present disclosure.

As shown in FIG. 7, the lithium-ion battery production method of the present disclosure includes (1) the stack preparing step, (2) the stack cutting step, (A) the molding step and (3) the attaching step. The method may implement (B) the resin cutting step and (C) the electrode cell group producing step in this sequence.

### (1) Stack preparing step

The stack preparing step is a step of preparing the stack (the first stack) of the cathode collector, the cathode layer, the electrolyte layer, the anode layer and the anode protective layer, which are stacked in this order.

The first stack includes the cathode collector, the cathode layer, the electrolyte layer, the anode layer and the anode protective layer in this order.

In the stack preparing step, the second stack including the first anode protective layer, the first anode layer, the first electrolyte layer, the first cathode layer, the cathode collector, the second cathode layer, the second electrolyte layer, the second anode layer and the second anode protective layer, which are stacked in this order, may be prepared.

For the sake of simplicity, the first stack and the second stack may be simply referred to as "stack" each.

The method for stacking the cathode collector, the cathode layer, the electrolyte layer, the anode layer and the anode protective layer is not particularly limited.

The plan view shape of the stack is not particularly limited. For example, it may be a quadrangular shape or a rectangular shape.

### (2) Stack cutting step

The stack cutting step is a step of cutting the stack into a predetermined size.

The predetermined size may be appropriately determined depending on the size of the produced lithium-ion battery.

### (A) Molding step

The molding step is a step of molding, after (2) the stack cutting step, a thermally conductive resin on at least one side surface of the stack.

The molding step may be implemented after (2)the stack cutting step and before (3) the attaching step, or it may be implemented after (3) the attaching step.

The thermally conductive resin is only required to be molded on at least one side surface of the stack. When viewing the stack toward the first direction (when viewing the stack from the front), the thermally conductive resin may be molded on both side surfaces in the direction perpendicular to the stacking direction. In the plan view of the stack, the thermally conductive resin may be molded on both longitudinal-directional sides of the rectangular stack, and the thermally conductive resin does not have to be molded on both lateral-directional sides of the rectangular stack.

### (3) Attaching step

The attaching step is a step of attaching the anode collector onto the anode protective layer of the stack after cutting the stack in (2) the stack cutting step.

When the stack is the second stack, the attaching step may be a step of, after (2) the stack cutting step, attaching the first anode collector onto the first anode protective layer of the second stack and attaching the second anode collector onto the second anode protective layer thereof.

As just described, by attaching the anode collector after (2) the stack cutting step, contact of burrs and so on with the anode collector, which are formed by cutting the stack, is suppressed.

In the plan view of the lithium-ion battery, the width-directional size of the anode collector is smaller than the stack. In the plan view of the lithium-ion battery, three of the four sides of each quadrangular anode collector may be situated inside three of the four sides of each quadrangular anode protective layer, and the remaining one side of the quadrangular anode collector may be situated outside the remaining one side of the quadrangular anode protective layer.

### (B) Resin cutting step

The resin cutting step is a step of, after attaching the anode collector in (3) the attaching step, cutting the stack along the stacking direction at a predetermined position of the molded thermally conductive resin.

The predetermined thermally conductive resin cutting position is only required to be a position where, when viewing the stack toward the first direction (when viewing the stack from the front), the thickness of the thermally conductive resin in the direction perpendicular to the stacking direction is equal to a desired thickness.

The desired thickness may be 1 mm or more, or it may be 2 mm or more. On the other hand, it may be 10 mm or less.

By cutting the thermally conductive resin in the resin cutting step, the stack obtains a flat end surface. Accordingly, the adhesion to the outer casing (such as a can and a laminate film) is increased, thereby increasing the heat dissipation of the lithium-ion battery.

### (C) Electrode cell group producing step

The electrode cell group producing step is a step of, when the second stack is prepared in (1) the stack preparing step, obtaining the electrode cell group by stacking a plurality of the electrode cells obtained after (B) the resin cutting step, the electrode cells each consisting of the first anode collector, the first anode protective layer, the first anode layer, the first electrolyte layer, the first cathode layer, the cathode collector, the second cathode layer, the second electrolyte layer, the second anode layer, the second anode protective layer and the second anode collector, which are stacked in this order.

In the electrode cell group producing step, the electrode cell group may be produced by the following method when the first stack is prepared in (1) the stack preparing step.

First, a total of two lithium-ion batteries are prepared, in each of which the cathode collector, cathode layer, electrolyte layer, anode layer, anode protective layer and anode collector obtained after (B) the resin cutting step are stacked in this order.

Next, the cathode collector of the first lithium-ion battery is attached to the cathode collector of the second lithium-ion battery, thereby producing the electrode cell comprising the first anode collector, the first anode protective layer, the first anode layer, the first electrolyte layer, the first cathode layer, the cathode collector, the second cathode layer, the second electrolyte layer, the second anode layer, the second anode protective layer and the second anode collector, which are stacked in this order.

Then, the electrode cell group is produced by stacking a plurality of the electrode cells.

The present disclosure is not limited to the above-mentioned embodiments. The above-mentioned embodiments are examples, and any that has the substantially same essential features as the technical ideas described in the claims of the present disclosure and exerts the same effects and advantages as the embodiments is included in the technical scope of the present disclosure.

### EXAMPLES

### (Example 1)

### [Production of anode layer]

First, PVdF (a binder), Si (an anode active material) and a sulfide solid electrolyte (Li₂S-P₂S₅-based glass ceramic) were put in a polypropylene container. They were stirred for 30 minutes by a ultrasonic disperser, thereby obtaining an anode layer slurry. The slurry was applied to one surface of an Al foil (width 120 mm) so that the applied slurry size was 70 mm in width and 80 mm in length. The applied slurry was dried to form an anode layer on the Al foil.

### [Production of solid electrolyte layer]

First, heptane (a solvent), SBR (a binder) and a sulfide solid electrolyte (Li₂S-P₂S₅-based glass ceramic) were put in a polypropylene container. They were stirred for 15 minutes by the ultrasonic disperser, thereby obtaining a solid electrolyte layer slurry. The slurry was applied to one surface of an Al foil (width 120 mm) so that the applied slurry size was 80 mm in width and 80 mm in length. The applied slurry was dried to form a solid electrolyte layer.

### [Production of cathode layer]

In the air atmosphere, cathode active material particles (particles in which Li_{1.15}Ni_{1/3}Co_{1/3}Mn_{1/3}O₂ is the main phase) were coated with lithium niobate by use of a tumbling/fluidizing coater (manufactured by Powrex Corporation). The coated particles were fired in the air atmosphere, thereby obtaining cathode active material particles having a lithium niobate coating layer.

Next, PVdF (a binder), the cathode active material particles, a sulfide solid electrolyte (Li₂S-P₂S₅-based glass ceramic) and VGCF (manufactured by Showa Denko K. K.) (an electroconductive material) were put in a polypropylene container. They were stirred for 20 minutes by an ultrasonic disperser, thereby obtaining a cathode layer slurry. The slurry was applied to both surfaces of an Al foil with a width of 120 mm (as a cathode collector) so that the applied slurry size was 80 mm in width and 80 mm in length. The applied slurry was dried to form the first structure consisting of a cathode layer, the cathode collector and a cathode layer.

### [Production of the third structure]

The solid electrolyte layer was transferred onto both surfaces of the first structure by roll pressing so that the center positions of the transferred solid electrolyte layers were coincident. The Al foil on each solid electrolyte layer was removed therefrom, thereby obtaining the second structure consisting of the solid electrolyte layer, the cathode layer, the cathode collector, the cathode layer and the solid electrolyte layer in this order.

Then, the anode layer was transferred onto both surfaces of the second structure by roll pressing. The Al foil on each anode layer was removed therefrom, thereby obtaining the third structure consisting of the anode layer, the solid electrolyte layer, the cathode layer, the cathode collector, the cathode layer, the solid electrolyte layer and the anode layer in this order.

### [Pressing]

The third structure was roll-pressed to a thickness of 220 µm.

### [Formation of anode protective layers]

First, acetylene black (a carbonaceous material) and SBR (a thermoplastic resin) were weighed in a ratio of 20:80 (unit: vol. %). Then, heptane was added thereto, thereby obtaining an anode protective layer composition.

Next, the anode protective layer composition was applied onto the two anode layers of the third structure so that the applied composition was 60 mm in width, 60 mm in length and 2 µm in thickness. The applied composition was dried to form anode protective layers, thereby obtaining the second stack consisting of the anode protective layer, the anode layer, the solid electrolyte layer, the cathode layer, the cathode collector, the cathode layer, the solid electrolyte layer, the anode layer and the anode protective layer in this order.

The second stack was cut so that the protrusion of the cathode collector, which was used for foil stacking, was left and the anode layers were changed from a width of 70 mm and a length of 80 mm to a width of 60 mm and a length of 60 mm to fit the region where the anode protective layers were formed. That is, the second stack was cut at the predetermined position of the second-directional end portion thereof in the longitudinal direction and the predetermined position thereof in the lateral direction.

By this cutting, in the second direction of the second stack, the position of the end portion of the anode protective layers was caused to coincide with the position of the end portion of the cathode collector, the position of the end portion of the cathode layers, the position of the end portion of the solid electrolyte layers, and the position of the end portion of the anode layers.

By this cutting, when viewing the second stack toward the first direction (when viewing the second stack from the front), in the direction perpendicular to the stacking direction, the positions of both ends of the cathode collector, the positions of both ends of the cathode layers, the positions of both ends of the solid electrolyte layers, the positions of both ends of the anode layers, and the positions of both ends of the anode protective layers are coincident were caused to coincide,.

### [Attachment of anode collectors]

An Al foil was prepared as an anode collector. A Ni-plated layer was provided as an anode collector protective layer on both surfaces of the Al foil, thereby obtaining the Al foil plated with Ni.

The second stack was heated for two minutes. The Ni-plated Al foil was attached onto the two anode protective layers of the second stack so that the size of the overlapping part of each Al foil (excluding the protrusion of the anode collector for foil stacking) was a width of 58 mm and a length of 59 mm, relative to each anode protective layer with a width of 60 mm and a length of 60 mm, thereby obtaining an electrode cell consisting of the anode collector, the anode collector protective layer, the anode protective layer, the anode layer, the solid electrolyte layer, the cathode layer, the cathode collector, the cathode layer, the solid electrolyte layer, the anode layer, the anode protective layer, the anode collector protective layer and the anode collector.

By the attachment, the first-directional end portion of the anode protective layers was caused to protrude in the first direction more than the first-directional end portion of the anode collectors.

Also, by the attachment, when viewing the electrode cell toward the first direction (when viewing the electrode cell from the front), in the direction perpendicular to the stacking direction, both ends of the anode protective layers were caused to protrude more outward than the anode collectors.

Also, by the attachment, the second-directional end portion of the anode collectors and the second-directional end portion of the anode collector protective layer were caused to protrude in the second direction more than the second-directional end portion of the anode protective layers.

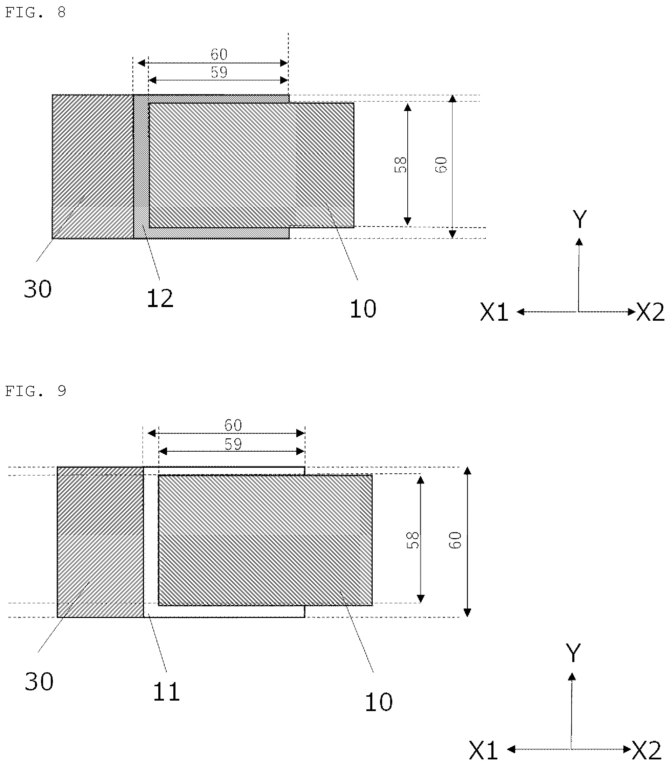

FIG. 8 is a schematic plan view of the electrode cell of Example 1.

As shown in FIG. 8, in the plan view of the electrode cell of Example 1, the anode collector 10, the anode protective layer 12 and the cathode collector 30 are visible.

As shown in FIG. 8, in the electrode cell of Example 1, the X1-directional (first-directional) end portion of the anode protective layer 12 protrudes in the X1 direction more than the X1-directional end of the anode collector 10.

As shown in FIG. 8, in the electrode cell of Example 1, the X2-directional (second-directional) end portion of the anode collector 10 protrudes in the X2 direction more than the X2-directional end of the anode protective layer 12.

As shown in FIG. 8, in the electrode cell of Example 1, three of the four sides of the rectangular anode collector 10 are situated inside three of the four sides of the rectangular anode protective layer 12.

As shown in FIG. 8, in the electrode cell of Example 1, the X1-directional end portion of the cathode collector 30 protrudes in the X1 direction more than the X1-directional end portion of the anode protective layer 12.

### [Production of battery]

On the second direction side, the anode foil stacking portion configured to bundle and stack the second-directional end portion of the anode collectors, was attached to the electrode cell.

On the first direction side, the cathode foil stacking portion configured to bundle and stack the first-directional end portion of the cathode collector, was attached to the electrode cell.

Then, the electrode cell was enclosed in a laminate film, thereby obtaining a battery.

### (Comparative Example 1)

The battery of Comparative Example 1 was obtained in the same manner as Example 1, except for the following: in [Formation of anode protective layers], the anode protective layers were formed to have a width of 58 mm and a length of 59 mm relative to the anode layers with a width of 60 mm and a length of 60 mm, and in [Attachment of anode collectors], the Ni-plated Al foil was attached onto the two anode protective layers of the second stack so that the size of the overlapping part of each Al foil (excluding the protrusion of the anode collector for foil stacking) was a width of 58 mm and a length of 59 mm, relative to each anode protective layer with a width of 58 mm and a length of 59 mm. By the attachment, the first-directional end portion of the anode protective layers was caused to coincide with the first-directional end portion of the anode collectors, without protruding the first-directional end portion of the anode protective layers in the first direction more than the first-directional end portion of the anode collectors.

FIG. 9 is a schematic plan view of the electrode cell of Comparative Example 1.

As shown in FIG. 9, in the plan view of the electrode cell of Comparative Example 1, the anode collector 10, the anode layer 11 and the cathode collector 30 are visible.

As shown in FIG. 9, in the plan view of the electrode cell of Comparative Example 1, compared to the electrode cell of Example 1, in the region with a width of 60 mm and a length of 1 mm, the X1-directional end portion of the anode layer 11 was not protected by the anode protective layer from the anode collector 10 and was exposed.

As shown in FIG. 9, in the electrode cell of Comparative Example 1, the X1-directional (first-directional) end portion of the anode layer 11 protrudes in the X1 direction more than the X1-directional end of the anode collector 10.

As shown in FIG. 9, in the electrode cell of Comparative Example 1, the X2-directional (second-directional) end portion of the anode collector 10 protrudes in the X2 direction more than the X2-directional end of the anode layer 11.

As shown in FIG. 9, in the electrode cell of Comparative Example 1, three of the four sides of the rectangular anode collector 10 are situated inside three of the four sides of the rectangular anode layer 11.

As shown in FIG. 9, in the electrode cell of Comparative Example 1, the X1-directional end portion of the cathode collector 30 protrudes in the X1 direction more than the X1-directional end portion of the anode layer 11.

### [Evaluation of batteries]

First, CCCV charging of the batteries of Example 1 and Comparative Example 1 was carried out to 4.1 V. Then, the batteries were stored at 80°C for 100 hours. Then, the batteries were discharged to 0 V. Finally, the presence of LiAl alloy in the batteries was checked.

As a result, while the formation of LiAl alloy was not confirmed in the battery of Example 1, the formation of LiAl alloy was confirmed in the battery of Comparative Example 1.

From the above results, it was confirmed that contact of the burrs of the anode collectors with the anode layers and alloying of the anode layers and the anode collectors are suppressed by causing, by the attachment, the first-directional end portion of the anode protective layers to protrude in the first direction more than the first-directional end portion of the anode collectors.

### REFERENCE SIGNS LIST

10. Anode collector
11. Anode layer
12. Anode protective layer
13. Anode collector protective layer
20. Electrolyte layer
30. Cathode collector
31. Cathode layer
40. Anode foil stacking portion
50. Cathode foil stacking portion
60. Thermally conductive resin
70. Void
80. Electrode cell
100. Lithium-ion battery
200. Lithium-ion battery
300. Lithium-ion battery

## Claims

1. A lithium-ion battery (100),
wherein a cathode collector (30), a cathode layer (31), an electrolyte layer (20), an anode layer (11), an anode protective layer (12) and an anode collector (10) are stacked in this order;
wherein, in a first direction perpendicular to a stacking direction, a first-directional end portion of the anode protective layer (12) protrudes in the first direction more than a first-directional end portion of the anode collector (10); and
wherein the anode protective layer (12) comprises at least one selected from the group consisting of Ni, Cu, a carbonaceous material and an electroconductive resin.

2. The lithium-ion battery (100) according to claim 1, wherein, when viewing the lithium-ion battery (100) toward the first direction, in the direction perpendicular to the stacking direction, both ends of the anode protective layer (12) protrude more outward than the anode collector (10).

3. The lithium-ion battery (100) according to claim 1 or 2, wherein, when considering a direction opposite to the first direction as a second direction, in the second direction, a position of an end portion of the anode protective layer (12), a position of an end portion of the cathode collector (30), a position of an end portion of the cathode layer (31), a position of an end portion of the electrolyte layer (20), and a position of an end portion of the anode layer (11) are coincident.

4. The lithium-ion battery (100) according to any one of claims 1 to 3, wherein a first-directional end portion of the anode layer (11) protrudes in the first direction more than a first-directional end portion of the anode protective layer (12).

5. The lithium-ion battery (100) according to any one of claims 1 to 4,
wherein the lithium-ion battery (100) further comprises an anode collector protective layer (13) between the anode collector (10) and the anode protective layer (12), and
wherein, when considering the direction opposite to the first direction as the second direction, a second-directional end portion of the anode collector (10) protrudes in the second direction more than a second-directional end portion of the anode protective layer (12); the lithium-ion battery (100) comprises, on a second direction side, an anode foil stacking portion (40) configured to bundle and stack the second-directional end portion of the anode collector (10); and
wherein a second-directional end portion of the anode collector protective layer (13) protrudes in the second direction more than the second-directional end portion of the anode protective layer (12).

6. The lithium-ion battery (100) according to claim 5, wherein a thickness of the anode protective layer (12) is larger than a thickness of the anode collector protective layer (13).

7. The lithium-ion battery (100) according to any one of claims 1 to 6, wherein, when viewing the lithium-ion battery (100) toward the first direction, in the direction perpendicular to the stacking direction, positions of both ends of the cathode collector (30), positions of both ends of the cathode layer (31), positions of both ends of the electrolyte layer (20), positions of both ends of the anode layer (11), and positions of both ends of the anode protective layer (12) are coincident.

8. The lithium-ion battery (100) according to any one of claims 1 to 7, wherein the anode collector (10) includes an Al foil, and a reaction potential (vs Li/Li⁺) of the anode layer (11) is lower than a reaction potential (vs Li/Li⁺) of Al.

9. The lithium-ion battery (100) according to any one of claims 1 to 8,
wherein the lithium-ion battery (100) comprises an electrode cell (80) comprising a first anode collector as the anode collector (10), a first anode protective layer as the anode protective layer (12), a first anode layer as the anode layer (11), a first electrolyte layer as the electrolyte layer (20), a first cathode layer as the cathode layer (31), the cathode collector (30), a second cathode layer as the cathode layer (31), a second electrolyte layer as the electrolyte layer (20), a second anode layer as the anode layer (11), a second anode protective layer as the anode protective layer (12), and a second anode collector as the anode collector (10), which are stacked in this order, and
wherein, when viewing the lithium-ion battery (100) toward the first direction, on both side surfaces in the direction perpendicular to the stacking direction, the electrode cell (80) comprises a thermally conductive resin (60) covering the first anode protective layer through the second anode protective layer.

10. The lithium-ion battery (100) according to claim 9,
wherein the lithium-ion battery (100) comprises an electrode cell (80) group comprising a stack of a plurality of the electrode cells (80), and
wherein, when viewing the lithium-ion battery (100) toward the first direction, in the direction perpendicular to the stacking direction, the lithium-ion battery (100) comprises a void (70) on both side surfaces of the first anode collectors of the electrode cell (80) group and a void (70) on both side surfaces of the second anode collectors thereof.

11. The lithium-ion battery (100) according to any one of claims 1 to 10,
wherein the anode protective layer (12) comprises the electroconductive resin, and
wherein the electroconductive resin comprises a thermoplastic resin and the carbonaceous material.

12. The lithium-ion battery (100) according to any one of claims 1 to 11, wherein the electrolyte layer (20) comprises a solid electrolyte.

13. A method for producing the lithium-ion battery (100) defined by any one of claims 1 to 12,
wherein a stack of the cathode collector (30), the cathode layer (31), the electrolyte layer (20), the anode layer (11) and the anode protective layer (12), which are stacked in this order, is prepared;
wherein the stack is cut into a predetermined size; wherein the anode collector (10) is attached onto the anode protective layer (12) of the stack after cutting the stack; and
wherein, in a plan view, a width-directional size of the anode collector (10) is smaller than the stack.

14. The method for producing the lithium-ion battery (100) according to claim 13,
wherein, after cutting the stack, a thermally conductive resin (60) is molded on at least one side surface of the stack, and
wherein, after attaching the anode collector (10), the stack is cut along the stacking direction at a predetermined position of the molded thermally conductive resin (60).
